# EUROPEAN PATENT APPLICATION

(11) **EP 4 787 817 A1**
(43) Date of publication of application: **05.08.2026**
(21) Application number: 24870588.1
(22) Date of filing: 20.09.2024
(51) Int. Cl.: H04L 67/1095

(54) **INFORMATION SYNCHRONIZATION METHOD, SERVICE SWITCHING METHOD, REQUEST PROCESSING METHOD, AND DEVICE**

(30) Priority: 27.09.2023 CN 202311263635
(71) Applicant: Vivo Mobile Communication Co., Ltd., Dongguan, Guangdong 523863 (CN)
(72) Inventor: ZHANG, Yizhong, Dongguan, Guangdong 523863 (CN)
(74) Representative: Walaski, Jan Filip
(86) International application number: PCT/CN2024/119922
(87) International publication number: WO 2025/067044

(57) **Abstract**

The present application belongs to the technical field of communications, and discloses an information synchronization method, a service switching method, a request processing method, and a device. The information synchronization method in embodiments of the present application comprises: during a PIN creation process or a PIN registration process, a first device executes a first operation. The first operation comprises at least one of the following: receiving a first message from a PIN server, the first message comprising first information; and sending a second message to the PIN server, the second message comprising the first information. The first information comprises at least one of the following: PIN service information, service information of the first device, and PIN description information.

## Description

### CROSS-REFERENCE TO RELATED APPLICATIONS

The present application claims priority to Chinese Patent Application No. 202311263635.6 filed in China on September 27, 2023, which is incorporated herein by reference in its entirety.

### TECHNICAL FIELD

The present application belongs to the field of communications technologies, and specifically relates to an information synchronization method, a service switching method, a request processing method, and a device.

### BACKGROUND

In a communication system supporting a personal Internet of Things network (Personal IoT Network, PIN), the PIN may include one or more personal Internet of Things network elements (Personal IoT Network Element, PINE). The PINE may be an Internet of Things (Internet of Things, IoT) device, a terminal with communication capability, or the like. In the related art, there exists a situation in which relevant information of the PIN cannot be synchronized in a timely manner or negotiation between devices cannot be performed before service switching, which results in relatively poor PIN service performance.

### SUMMARY OF THE INVENTION

Embodiments of the present application provide an information synchronization method, a service switching method, a request processing method, and a device, so as to address the problem of relatively poor PIN service performance caused by the inability to synchronize relevant information of the PIN in a timely manner or the inability to negotiate between devices before service switching.

In a first aspect, an information synchronization method is provided, including:
performing, by a first device, a first operation during a PIN creation procedure or PIN registration procedure; where
the first operation includes at least one of the following:
   receiving a first message from a PIN server, the first message including first information; or
   sending a second message to the PIN server, the second message including the first information; where
   the first information includes at least one of the following:
      PIN service information;
      service information of the first device; or
      PIN description information.

In a second aspect, an information synchronization method is provided, including:
performing, by a personal Internet of Things network PIN server, a second operation during a PIN creation procedure or PIN registration procedure; where
the second operation includes at least one of the following:
   sending a first message to a first device, the first message including first information; or
   receiving a second message from the first device, the second message including the first information; where
   the first information includes at least one of the following:
      PIN service information;
      service information of the first device; or
      PIN description information.

In a third aspect, a service switching method is provided, including:
sending, by a first device in a PIN, a first request message to a second device, the first request message being used for negotiating service switching in the PIN.

In a fourth aspect, a service switching method is provided, including:
receiving, by a second device in a PIN, a first request message from a first device, the first request message being used for negotiating service switching in the PIN.

In a fifth aspect, a request processing method is provided, including:
receiving, by a first device, a PIN service discovery request message sent by a fourth device; and
sending, by the first device, a PIN service discovery response message to the fourth device, the PIN service discovery response message including a first list; where
the first list is a list of devices supporting service switching in the PIN, the first list is determined based on first information, and the first information includes at least one of the following:
   PIN service information;
   service information of the first device; or
   PIN description information;
   or, the first list is a list of devices satisfying a first condition; where
   the first condition includes at least one of the following:
      having a direct connection to the fourth device;
      having a first application client, the first application client including: an application client deployed by the fourth device or an application client corresponding to a switching service; or
      supporting service switching.

In a sixth aspect, an information synchronization apparatus is provided, including:
an execution module, configured to perform a first operation during a personal Internet of Things network PIN creation procedure or PIN registration procedure; where
the first operation includes at least one of the following:
   receiving a first message from a PIN server, the first message including first information; or
   sending a second message to the PIN server, the second message including the first information; where
   the first information includes at least one of the following:
      PIN service information;
      service information of a first device; or
      PIN description information.

In a seventh aspect, an information synchronization apparatus is provided, including:
an execution module, configured to perform a second operation during a personal Internet of Things network PIN creation procedure or PIN registration procedure; where
the second operation includes at least one of the following:
   sending a first message to a first device, the first message including first information; or
   receiving a second message from the first device, the second message including the first information; where
   the first information includes at least one of the following:
      PIN service information;
      service information of the first device; or
      PIN description information.

In an eighth aspect, a service switching apparatus is provided, including:
a sending module, configured to send a first request message to a second device, where the first request message is used for negotiating service switching in a PIN, and a device corresponding to the apparatus is a device in a personal Internet of Things network PIN.

In a ninth aspect, a service switching apparatus is provided, including:
a receiving module, configured to receive a first request message from a first device, where the first request message is used for negotiating service switching in a PIN, and a device corresponding to the apparatus is a device in a personal Internet of Things network PIN.

In a tenth aspect, a request processing apparatus is provided, including:
a receiving module, configured to receive a personal Internet of Things network PIN service discovery request message sent by a fourth device; and
a sending module, configured to send a PIN service discovery response message to the fourth device, the PIN service discovery response message including a first list; where
the first list is a list of devices supporting service switching in the PIN, the first list is determined based on first information, and the first information includes at least one of the following:
   PIN service information;
   service information of the first device; or
   PIN description information;
   or, the first list is a list of devices satisfying a first condition; where
   the first condition includes at least one of the following:
      having a direct connection to the fourth device;
      having a first application client, the first application client including: an application client deployed by the fourth device or an application client corresponding to a switching service; or
      supporting service switching.

In an eleventh aspect, a device is provided. The device including a processor and a memory, where the memory is configured to store a program or an instruction capable of running on the processor, and when the program or instruction is executed by the processor, the steps of the information synchronization method on a first device side as provided in embodiments of the present application are implemented, or when the program or instruction is executed by the processor, the steps of the information synchronization method on the PIN server side as provided in embodiments of the present application are implemented, or when the program or instruction is executed by the processor, the steps of the service switching method on the first device side as provided in embodiments of the present application are implemented, or when the program or instruction is executed by the processor, the steps of the service switching method on the second device side as provided in embodiments of the present application are implemented, or when the program or instruction is executed by the processor, the steps of the request processing method as provided in embodiments of the present application are implemented.

In a twelfth aspect, a device is provided, including a processor and a communication interface, where the communication interface is configured to perform a first operation during a personal Internet of Things network PIN creation procedure or PIN registration procedure; where the first operation includes at least one of the following: receiving a first message from a PIN server, the first message including first information; or sending a second message to the PIN server, the second message including the first information; where the first information includes at least one of the following: PIN service information; service information of the first device; or PIN description information.

In a thirteenth aspect, a device is provided, including a processor and a communication interface, where the communication interface is configured to perform a second operation during a personal Internet of Things network PIN creation procedure or PIN registration procedure; where the second operation includes at least one of the following: sending a first message to a first device, the first message including first information; or receiving a second message from the first device, the second message including the first information; where the first information includes at least one of the following: PIN service information; service information of the first device; or PIN description information.

In a fourteenth aspect, a device is provided, including a processor and a communication interface, where the communication interface is configured to send a first request message to a second device, where the first request message is used for negotiating service switching in a PIN, and a device corresponding to the apparatus is a device in a personal Internet of Things network PIN.

In a fifteenth aspect, a device is provided, including a processor and a communication interface, where the communication interface is configured to receive a first request message from a first device, the first request message being used for negotiating service switching in a PIN.

In a sixteenth aspect, a device is provided, including a processor and a communication interface, where the communication interface is configured to receive a personal Internet of Things network PIN service discovery request message sent by a fourth device; and send a PIN service discovery response message to the fourth device, the PIN service discovery response message including a first list; where the first list is a list of devices supporting service switching in the PIN, the first list is determined based on first information, and the first information includes at least one of the following: PIN service information; service information of the first device; or PIN description information; or, the first list is a list of devices satisfying a first condition; where the first condition includes at least one of the following: having a direct connection to the fourth device; having a first application client, the first application client including: an application client deployed by the fourth device or an application client corresponding to a switching service; or supporting service switching.

In a seventeenth aspect, a readable storage medium is provided, where a program or an instruction is stored on the readable storage medium, and when the program or instruction is executed by a processor, the steps of the information synchronization method on a first device side as provided in embodiments of the present application are implemented, or the steps of the information synchronization method on the PIN server side as provided in embodiments of the present application are implemented, or the steps of the service switching method on the first device side as provided in embodiments of the present application are implemented, or the steps of the service switching method on the second device side as provided in embodiments of the present application are implemented, or the steps of the request processing method as provided in embodiments of the present application are implemented.

In an eighteenth aspect, a wireless communication system is provided, including a first device and a PIN server, where the first device is configured to perform the steps of the information synchronization method on the first device side as provided in embodiments of the present application, and the PIN server is configured to perform the steps of the information synchronization method on the PIN server side as provided in embodiments of the present application.

In a nineteenth aspect, a wireless communication system is provided, including a first device and a second device, where the first device is configured to perform the steps of the service switching method on the first device side as provided in embodiments of the present application, or the first device is configured to perform the steps of the request processing method provided by embodiments of the present application, and the second device is configured to perform the steps of the service switching method on the second device side as provided in embodiments of the present application.

In a twentieth aspect, a chip is provided. The chip includes a processor and a communication interface, where the communication interface and the processor are coupled, the processor is configured to run a program or an instruction to implement the information synchronization method on a first device side as provided in embodiments of the present application, or implement the information synchronization method on the PIN server side as provided in embodiments of the present application, or implement the steps of the service switching method on the first device side as provided in embodiments of the present application, or implement the steps of the service switching method on the second device side as provided in embodiments of the present application, or implement the steps of the request processing method provided by embodiments of the present application.

In a twenty-first aspect, a computer program/program product is provided. The computer program/program product is stored in a storage medium, and the computer program/program product is executed by at least one processor to implement the steps of the information synchronization method on the first device side as provided in embodiments of the present application, or the computer program/program product is executed by at least one processor to implement the steps of the information synchronization method on the PIN server side as provided in embodiments of the present application, or the computer program/program product is executed by at least one processor to implement the steps of the service switching method on the first device side as provided in embodiments of the present application, or the computer program/program product is executed by at least one processor to implement the steps of the service switching method on the second device side as provided in embodiments of the present application, or the computer program/program product is executed by at least one processor to implement the steps of the request processing method provided by embodiments of the present application.

In embodiments of the present application, during a PIN creation procedure or PIN registration procedure, a first device performs a first operation; where the first operation includes at least one of the following: receiving a first message from a PIN server, the first message including first information; or sending a second message to the PIN server, the second message including the first information; where the first information includes at least one of the following: PIN service information; service information of the first device; or PIN description information. Since the first device performs the first operation during the PIN creation procedure or PIN registration procedure, synchronization of relevant information of the PIN can be achieved during the PIN creation procedure or PIN registration procedure through at least one of the first message and the second message, thereby avoiding the problem that the inability to synchronize relevant information of the PIN in a timely manner affects PIN service performance, and further improving PIN service performance.

### BRIEF DESCRIPTION OF THE DRAWINGS

FIG. 1 is a block diagram of a wireless communication system to which embodiments of the present application are applicable;
FIG. 2 is a flowchart of an information synchronization method according to an embodiment of the present application;
FIG. 3 is a schematic diagram of an information synchronization according to an embodiment of the present application;
FIG. 4 is a schematic diagram of another information synchronization according to an embodiment of the present application;
FIG. 5 is a schematic diagram of another information synchronization according to an embodiment of the present application;
FIG. 6 is a schematic diagram of another information synchronization according to an embodiment of the present application;
FIG. 7 is a flowchart of another information synchronization method according to an embodiment of the present application;
FIG. 8 is a flowchart of a service switching method according to an embodiment of the present application;
FIG. 9 is a flowchart of another service switching method according to an embodiment of the present application;
FIG. 10 is a flowchart of a request processing method according to an embodiment of the present application;
FIG. 11 is a structural diagram of an information synchronization apparatus according to an embodiment of the present application;
FIG. 12 is a structural diagram of another information synchronization apparatus according to an embodiment of the present application;
FIG. 13 is a structural diagram of a service switching apparatus according to an embodiment of the present application;
FIG. 14 is a structural diagram of another service switching apparatus according to an embodiment of the present application;
FIG. 15 is a structural diagram of a request processing apparatus according to an embodiment of the present application;
FIG. 16 is a structural diagram of a communication device according to an embodiment of the present application;
FIG. 17 is a structural diagram of a device according to an embodiment of the present application; and
FIG. 18 is a structural diagram of another device according to an embodiment of the present application.

### DETAILED DESCRIPTION

The technical solutions in the embodiments of the present application will be clearly described below in conjunction with the drawings in the embodiments of the present application. Obviously, the described embodiments are part of the embodiments of the present application, not all of them. Based on the embodiments in the present application, all other embodiments obtained by those of ordinary skill in the art fall within the protection scope of the present application.

Terms such as "first" and "second" in the present application are used to distinguish similar objects and are not used to describe a specific order or sequence. It should be understood that terms used in this way can be interchanged where appropriate, so that the embodiments of the present application can be implemented in an order other than those illustrated or described herein, and objects distinguished by "first" and "second" are generally of one type and do not limit the number of objects, for example, there can be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after.

The term "indication" in the present application can be a direct indication (or explicit indication) or an indirect indication (or implicit indication). The direct indication can be understood as the sender explicitly informing the receiver of specific information, operations to be performed, or request results in the sent indication; the indirect indication can be understood as the receiver determining corresponding information according to the indication sent by the sender, or performing judgment and, based on the judgment result, determining operations to be performed or request results.

It is worth pointing out that the technology described in the embodiments of the present application is not limited to the Long Term Evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described may be used in the systems and radio technologies mentioned above and other systems and radio technologies. In the following descriptions, a new radio (New Radio, NR) system is described for an illustration purpose, and NR terms are used in most of the following description, but these technologies can also be applied to systems other than NR systems, such as the 6^{th} Generation (6^{th} Generation, 6G) communication system.

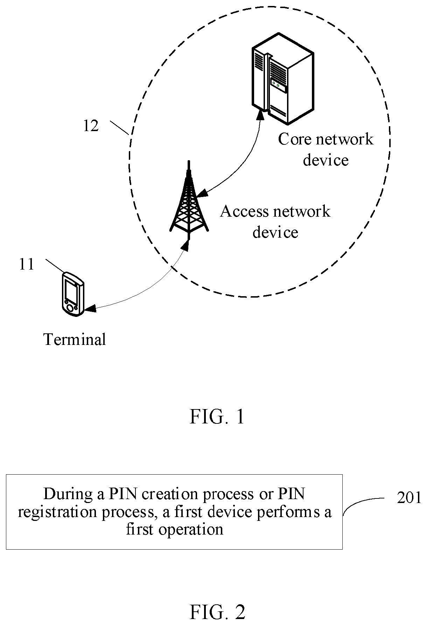

FIG. 1 is a block diagram of a wireless communication system to which the embodiments of the present application are applicable. The wireless communication system includes a terminal 11 and a network-side device 12. The terminal 11 can be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR), virtual reality (Virtual Reality, VR) device, a robot, a wearable device (Wearable Device), a flight vehicle (flight vehicle), vehicle user equipment (Vehicle User Equipment, VUE), a ship-borne device, a pedestrian user equipment (Pedestrian User Equipment, PUE), an IoT device, a smart home (home device with wireless communication function, such as a refrigerator, a television, a washing machine, a printer, or furniture), a game console, a personal computer (Personal Computer, PC), a teller machine, a self-service machine, or other terminalside devices. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment can also be called vehicle terminal, vehicle controller, vehicle module, vehicle component, vehicle chip, vehicle unit, or the like. It should be noted that the specific type of the terminal 11 is not limited in the embodiments of the present application.

The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or some other suitable term in the field. As long as the same technical effect is achieved, the base station is not limited to specific technical vocabulary. It should be noted that in the embodiments of the present application, only the base station in the NR system is taken as an example for introduction, and the specific type of the base station is not limited.

The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), or application function (Application Function, AF). It should be noted that in the embodiments of the present application, only the core network device in the NR system is described as an example, and the specific type of the core network device is not limited.

In embodiments of the present application, the above system further includes: a PIN server and an application server (Application Server, AS), and the PIN server and AS are not limited to specific types in the embodiments of the present application.

In the embodiments of the present application, a PIN includes one or more PINEs, and the PINE may be the above terminal, such as a terminal with communication capabilities, or an IoT device, such as a smart home, specifically a home device with wireless communication functions, such as a refrigerator, a television, a washing machine, a printer, or furniture.

The PIN includes a PIN element with management capability (PIN Element with Management Capability, PEMC), and includes a PIN element with gateway capability (PIN Element with Gateway Capability, PEGC).

The following describes in detail an information synchronization method, a service switching method, an apparatus, and a device provided by embodiments of the present application through some embodiments and application scenarios thereof with reference to the accompanying drawings.

Referring to FIG. 2, FIG. 2 is a flowchart of an information synchronization method according to an embodiment of the present application. As shown in FIG. 2, the method includes the following step:
step 201. a first device performs a first operation during a PIN creation procedure or PIN registration procedure; where
the first operation includes at least one of the following:
   receiving a first message from a PIN server, the first message including first information; or
   sending a second message to the PIN server, the second message including the first information; where
   the first information includes at least one of the following:
      PIN service information;
      service information of the first device; or
      PIN description information.

The PIN creation procedure may be a creation procedure in which the first device requests the PIN server to create a PIN, and the first device may be a PINE or PEMC, specifically a terminal in embodiments of the present application, such as a terminal with conventional communication functions (such as a mobile phone), or an IoT device, or a smart home.

The first device performing the first operation during the PIN creation procedure or PIN registration procedure may be performing the first operation at a beginning stage, an intermediate stage, or an ending stage of the PIN creation procedure or PIN registration procedure.

The first message may be any message sent by the PIN server to the first device during the PIN creation procedure or PIN registration procedure, and the message includes the first information described above.

In the above step, since a first message from the PIN server is received during the PIN creation procedure or PIN registration procedure, and the first message includes the first information, synchronization of the first information between the first device and the PIN server can be achieved during the PIN creation procedure or PIN registration procedure.

The second message may be any message sent by the first device to the PIN server during the PIN creation procedure or PIN registration procedure, and the message includes the first information.

In the above step, since a second message is sent to the PIN server during the PIN creation procedure or PIN registration procedure, and the second message includes the first information, synchronization of the first information between the first device and the PIN server can be achieved during the PIN creation procedure or PIN registration procedure.

The PIN service information described above may be relevant information used for describing services provided by the PIN.

The service information of the first device may be relevant information used for describing services provided by the first device in the PIN.

The PIN description information described above may be relevant information used for describing the PIN.

In embodiments of the present application, through the above step, the first device can perform the first operation during the PIN creation procedure or PIN registration procedure, so that synchronization of relevant information of the PIN can be achieved during the PIN creation procedure or PIN registration procedure through at least one of the first message and second message, thereby avoiding a problem of degradation of PIN service performance due to inability to synchronize relevant information of the PIN in a timely manner, and further improving PIN service performance. For example, by synchronizing relevant information of the PIN during the PIN creation procedure or PIN registration procedure, it is possible to avoid a problem that the first device or PIN server cannot obtain services supported by the PIN in a timely manner, resulting in PIN services of the first device or PIN server to be limited and degradation of PIN service performance. By synchronizing relevant information of the PIN during the PIN creation procedure or PIN registration procedure, the first device or server can obtain the services supported by the PIN in a timely manner, enabling the first device or PIN server to provide services more effectively, thereby improving PIN service performance.

In an optional implementation, the PIN service information includes at least one of the following:
a service provider identifier of a service provided by the PIN;
a service type of a service provided by the PIN; or
a service feature of a service provided by the PIN.

The service provided by the PIN may be an aggregation of services provided by all PINEs in the PIN.

The service provider identifier may be a client identifier (client ID), a generic public subscription identifier (Generic Public Subscription Identifier, GPSI), or an identity token (identity token).

The service type may be a type such as gaming, video, or audio.

The service feature may be a feature such as service description information or service information.

In this implementation, synchronization of at least one of a service provider identifier, a service type, and a service feature of services provided by the PIN can be achieved, so that the PIN server or first device can better learn of the service provided by the PIN, which is beneficial for improving PIN service performance.

In an optional implementation, the service information of the first device includes at least one of the following:
a service provider identifier of a service provided by the first device;
a service type of a service provided by the first device; or
a service feature of a service provided by the first device.

The service provided by the first device refers to the service provided by the first device in the PIN.

In this implementation, synchronization of at least one of a service provider identifier, a service type, and a service feature of services provided by the first device can be achieved, so that the PIN server or first device can better learn of the service provided by the first device, which is beneficial for improving PIN service performance.

In an optional implementation, the receiving a first message from a PIN server includes:
receiving a PIN creation response message from the PIN server, the PIN creation response message including the first information.

The PIN creation response message may be a PIN creation response message replied by the PIN server after receiving a PIN creation request message sent by the first device.

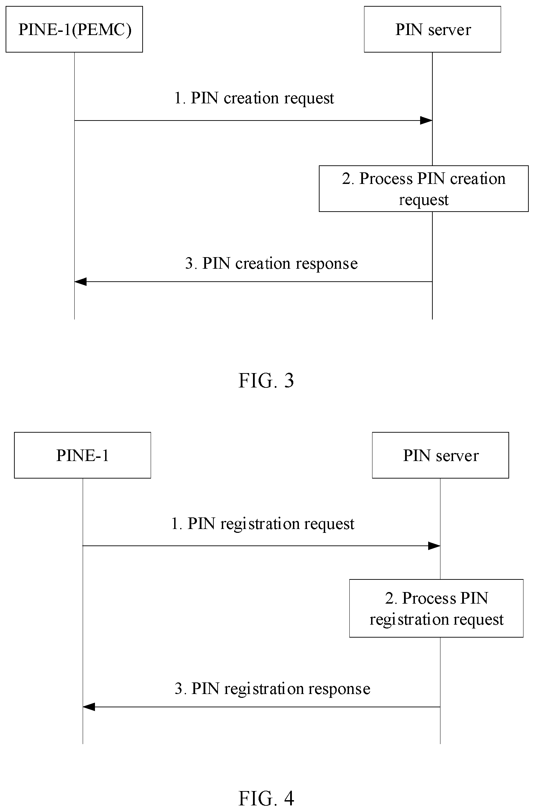

For example, taking a first device being PINE1 (or PEMC) as an example, as shown in FIG. 3, PINE1 sends a PIN creation request message to the PIN server, the PIN server processes the PIN creation request, and the PIN server sends a PIN creation response message to PINE1, the PIN creation response message including the first information described above.

In this implementation, synchronization of the first information can be achieved through the PIN creation response message, without the need to introduce an additional message, thereby saving transmission overhead of the device.

It should be noted that, in some implementations, the first message is not limited to the PIN creation response message in the embodiments of the present application. For example, the first message may alternatively be a newly defined message for synchronizing the first information during the PIN creation procedure or PIN registration procedure.

Optionally, the PIN creation response message carries a PIN profile (PIN profile) the PIN profile including the first information.

The PIN profile may be a profile already defined in a protocol, so that synchronization of the first information can be achieved through the PIN profile already defined in the protocol, thereby reducing the complexity of information synchronization.

The PIN profile may be a PIN profile represented by Table 1 below:

**Table 1:**

| Parameter name | Parameter description | PIN server | PEMC | PEGC |
|---|---|---|---|---|
| PIN ID | The identifier of the PIN | Y | Y | Y |
| PIN description | Human-readable description of the PIN, for example, the company name, location, or the service type. | Y | Y | Y |
| PIN state | Indicates the current state of the PIN (activated or deactivated). When the PIN is in deactivated state, services offered by the PIN are inaccessible, and no PIN elements can join the PIN. | Y | Y | Y |
| | Also PEGC also closes all the communication channels it has created for the flow of application traffic from PIN elements via 5GS to the application server | | | |
| Duration | Indicates the time period of how long the PIN can be active | Y | Y | Y |
| Maximum number of PIN elements | Maximum number of PIN elements allowed to join the PIN | Y | Y | N |
| PIN services | List of services that can be provided within the PIN, including services provided by PINE or services that application clients can provide on PINE: service provider identifier; service type; service feature; | Y | Y | N |
| PEMC list | List of identifiers of PIN elements that can be allowed to take the role of PEMC (for example, PIN client ID and UE GPSI), also including whether the role is primary or secondary | Y | Y | Y |
| | >PIN element ID | | | |
| | >Role | | | |
| | >Port number | | | |
| PEGC ID list | List of identifiers of PIN elements that can be allowed to take the role of PEGC (for example, PIN client ID and UE GPSI) | Y | Y | Y |
| | >PIN element ID | | | |
| | >Port number (see note) | | | |
| PIN server ID | The identifier of the PIN server that serves the PIN | N | Y | Y |
| PIN service endpoint | The endpoint information (for example, URI, FQDN, and IP address) used to communicate with the PIN server. | N | Y | Y |
| List of PIN elements | List of PIN elements that can be allowed to join the PIN | Y | Y | Y |
| | >PIN element ID | | | |
| | >Port number | | | |
| Note: The port number refers to a port that the PIN uses to expose services in the PIN. | | | | |

Table 1 is merely an exemplary illustration of the PIN profile, and the PIN profile is not limited in the embodiments of the present application.

In some implementations, the PIN creation response message may be as shown in Table 2:

**Table 2:**

| Information element | Status | Description |
|---|---|---|
| Success Response | O | Indicates that the PIN creation request is successful. |
| > PIN ID | M | Identifier of the newly created PIN. |
| > Expiration time | M | Indicates the expiration time of the PIN. |
| > Heartbeat Timer | M | Assigned PEMC/PEGC/PINE heartbeat timer. The PIN server assigns the heartbeat to PEMC/PEGC/PINE individually |
| > Lists of PINEs | O | List of PIN elements and their identifier which are authorized and made as member of the newly created PIN if the PIN creation request contains the list of PIN elements to be included in the PIN. |
| > PEGC information | O | PEGC information |
| >> Identifier of PEGCs | M | Indicates the PINE identifier authorized to be the PEGC of this PIN |
| >> PEGC address | O | Assigned IP address or port number of PEGC |
| >> Access control information | O | Includes: username, account, SSID, BSSID. All the information is used by PIN elements in PIN to access 5G or access other application outside of PIN |
| > PIN profile | O | Refer to Table 1 above |
| Failure response | O | Indicates that the PIN creation request fails |
| > Cause | M | Provides the cause of PIN creation request failure |

The Table 2 is merely an exemplary illustration of the PIN creation response message, and the PIN creation response message is not limited in the embodiments of the present application.

In some implementations, the PIN creation response message may alternatively directly carry the first information, and is not limited to carrying the first information through the PIN profile.

In an optional implementation, the sending a second message to the PIN server includes:
sending a PIN creation request message to the PIN server, the PIN creation request message including the first information.

The PIN creation request message is a request message used for requesting creation of a PIN, for example, the PIN creation request message shown in FIG. 3.

In this implementation, synchronization of the first information can be achieved through the PIN creation request message, without the need to introduce an additional message, and saving transmission overhead of the device.

It should be noted that, in some implementations, the second message is not limited to the PIN creation request message in the embodiments of the present application. For example, the second message may alternatively be a newly defined message for synchronizing the second information during the PIN creation procedure or PIN registration procedure.

In some implementations, the PIN creation request message may be as shown in Table 3:

**Table 3:**

| Information element | Status | Description |
|---|---|---|
| Terminal identifier | M | The identifier of the terminal (for example, GPSI or identity token) or PIN client ID of PEMC |
| Security credentials | M | Security credentials resulting from a successful authorization for the PIN service |
| PIN client profile(s) | O | Profiles of PIN clients |
| Terminal location | O | The location information of the terminal |
| List of PINEs | O | The PINs that have directly communicated with PEMC, and these PINs are intended to be added into PIN |
| Additional PEMCs | O | Indicates additional PEMCs that are allowed to manage the PIN. |
| Service information | O | List of services that the PINE can provide, including services provided by the PINE or services that application clients can provide on the PINE: |
| | | >PIN service provider identifier |
| | | >PIN service type |
| | | >PIN service feature |
| PIN description information | O | Human-readable description of the PIN, for example, the company name, location, or the service type. |

The Table 3 is merely an exemplary illustration of the PIN creation request message, and the PIN creation request message is not limited in the embodiments of the present application.

In one embodiment, during PIN creation, the PIN server carries the PIN profile in the creation acceptance message, or the PEMC carries service information in the creation request message. As shown in FIG. 3, the method includes the following steps.

Step 1. The PEMC initiates a PIN creation procedure, and carries service information in a PIN creation request (PIN creation request) message, where the service information includes at least one of the following:
a service provider identifier, such as a client ID, GPSI, or identity token;
a service type, such as gaming, video, or audio; or
a service feature, such as service description information or service information.

Optionally, the PIN creation request message further includes PIN description information.

Step 2. The PIN server processes the PIN creation request.

Step 3. The PIN server responds to the PIN creation response (accept or reject) sent by the PEMC, and in the case of acceptance, sends a PIN creation accept (PIN creation accept) message, the PIN creation response message including a PIN profile (PIN profile).

In some implementations, if the PEMC does not carry service information in step 1, the PIN server obtains the service information, which can be obtained via application layer messages, subscription, or the like. The subscription here refers to negotiations conducted between the PIN server and the user before PIN creation, such as which services the PIN can provide and which services are included. In this case, the PIN profile on the PIN server side has some initial values, and thus the PIN server can synchronize the PIN profile with the PEMC in step 3. The application layer messages here refer to messages through which the PEMC synchronizes required parameters in the PIN profile (for example, services that the PIN can provide) to the PIN server, so that the PIN server can synchronize the PIN profile with the PEMC in step 3.

In an optional implementation, the sending a second message to the PIN server includes:
sending a PIN registration request message to the PIN server, the PIN registration request message including the first information.

The PIN registration request message may be a request message for requesting registration in the PIN from the PIN server.

In some implementations, the PIN registration request message may be a PINE registration request message as shown in FIG. 4. For example, the first device is PINE1, as shown in FIG. 4, the first device sends a PINE registration request message to the PIN server, the request message carries the first information, the PIN server processes the request, and the PIN server sends a PINE registration response message to the first device.

In this implementation, synchronization of the first information can be achieved through the PIN registration request message, without the need to introduce an additional message, and saving transmission overhead of the device.

In some implementations, the PIN registration request message may be as shown in Table 4:

**Table 4:**

| Information element | Status | Description |
|---|---|---|
| Terminal identifier | M | The identifier of the terminal (for example, GPSI or identity token) or PIN client ID of PEMC |
| Security credentials | M | Security credentials resulting from a successful authorization of PIN service. |
| Medium access control (Medium Access Control, MAC) address | O | MAC address of the requested PINE |
| Vendor name | O | Vendor name of the PINE |
| Device description | O | Description of the device |
| PINE address | O | The IP address of the PINE (if available) |
| Port number | M | Port number of the PIN client on PINE/PEMC/PEGC to support PIN enabler layer communication. The port number is the port used by the PIN to expose a service within the PIN. |
| PINE capabilities | O | Identifies whether the PINE is capable of becoming a PEMC, PEGC, or both. |
| > Maximum number of PINEs (present only when PINE capabilities exist) | O | Indicates the maximum number of PINEs that can be managed by the PEMC or PEGC |
| Service information | O | List of services that the PINE can provide, including services provided by the PINE or services that application clients can provide on the PINE: |
| | | >PIN service provider identifier |
| | | >PIN service type |
| | | >PIN service feature |

The Table 4 is merely an exemplary illustration of the PIN registration request message, and the PIN registration request message is not limited in the embodiments of the present application.

In one embodiment, when the PINE registers with the PIN server, service information is carried. As shown in FIG. 4, the method includes the following steps:
Step 1. A PINE initiates a PIN registration (such as PINE registration) procedure to the PIN server, and service information is carried in a PIN registration request message, where the PIN registration request message may be carrying service information in a PINE registration request (PINE registration request) message.

The service information includes at least one of the following:
a service provider identifier, such as a client ID, GPSI, or identity token;
a service type, such as gaming, video, or audio; or
a service feature, such as service description information or service information.

Step 2. The PIN server authorizes whether the PINE applying for registration can register in the PIN server.

Step 3. The PIN server responds to the registration request of the PINE (accept or reject).

In an optional implementation, the method further includes:
sending, by the first device, a first request message to a second device, the first request message being used for negotiating service switching in the PIN.

The first request message may be a first request message sent to the second device in a case that it is determined to switch the service to the second device, so as to negotiate service switching with the second device.

The service switching may be switching the service of the first device in the PIN to the second device.

In this implementation, negotiation with the second device can be performed before switching the service to the second device, to avoid the possibility of service switching failure due to the second device being unprepared, thereby improving the reliability of service switching.

Optionally, the method further includes:
receiving, by the first device, a first response message from the second device, the first response message being used for indicating acceptance or rejection of the first request message.

The first response message is a response made by the second device after receiving the above first request message, such as the second device determining whether to accept the above first request message based on its own situation.

Through the first response message, service switching can be performed to the second device in a case that the second device accepts the first request message, thereby avoiding service switching failure and improving PIN service performance.

In the embodiments of the present application, receiving the first response message is not limited. For example, in some implementations, a timer may be started, and if the first response message is not received before the timer expires, the second device is defaulted to reject the first request message.

Optionally, the first request message includes at least one of the following:
a PIN identifier, identification information of the first device, or the first information.

The above first information refers to the corresponding description in the above implementation, which is not repeated here.

In this implementation, since the first request message includes at least one of the PIN identifier, the identification information of the first device, or the first information, the second device can better determine whether to accept the first request message, making service switching more reliable.

Optionally, in a case that the first response message indicates rejection of the first request message, the first response message includes a cause value, the cause value being used for indicating at least one of the following:
insufficient resources, inability to perform a corresponding service operation, authorization failure (Authorization failure).

The insufficient resources may indicate that the second device does not have sufficient resources to provide the switched service.

The inability to perform a corresponding service operation may indicate that the second device cannot perform the service operation corresponding to the service switching.

The authorization failure may indicate that the second device has not obtained the corresponding authorization for the service switching, or the second device cannot authorize the service switching.

In this implementation, since the cause value is included in the case of indicating rejection, the first device can learn of the cause of the rejection by the second device, thereby avoiding subsequent requests to the second device for corresponding switching, to save resource overhead.

Optionally, the method further includes:
determining, by the first device, the second device, the second device satisfying at least one of the following:
being within coverage of a same PEGC as the first device; or
having a direct connection to the first device.

The "having a direct connection to the first device" means that the first device has direct connection communication with the second device.

In this implementation, service switching can be negotiated with the second device only in a case that the second device satisfies at least one of the above, so that the service switching is performed within the coverage of the same PEGC, which can reduce the overhead of the PEGC, without the need to introduce an additional PEGC. In addition, switching is performed between devices with direct connections, so that the service after switching can be well aligned with the service before switching, thereby improving PIN service performance.

Optionally, in a case that the first response message indicates rejection of the first request message, the method further includes at least one of the following:
determining, by the first device, a third device based on a first list; or
terminating, by the first device, a PIN service switching procedure when there is no available third device in the first list; where
the third device is used for service switching in the PIN, and the first list is a list of devices supporting service switching in the PIN.

The first list may be a first list obtained by the first device from PEMG, and the devices included in the list support the service switching, or are understood to support the services corresponding to the service switching.

No available third device in the first list can be understood as there is no available third device in the first list, such as all devices in the first list rejecting the first request message.

The determining, by the first device, a third device based on a first list may be selecting a third device in the first list to send the first request message to the third device, requesting service switching to the third device. For the switching service procedure after determination of the third device, reference is made to the corresponding description for the second device, and details are not repeated here.

In this implementation, after the second device rejects, another device can be selected for switching or the service switching procedure can be terminated, to improve service switching performance or ensure the integrity of the service switching procedure.

In an optional implementation, the method further includes:
receiving, by the first device, a PIN service discovery request message sent by a fourth device; and
responding, by the first device, to the PIN service discovery request message based on a PIN profile; where
the PIN profile includes the first information.

In this implementation, the first device may be a PEMC, and the fourth device is a device requesting service switching.

The PIN service discovery request message may be used for requesting information of the service requested by the fourth device, such as information of the service for which the fourth device requests service switching.

For the PIN profile, reference is made to the corresponding description in the above implementation, and details are not repeated here.

The responding to the PIN service discovery request message based on a PIN profile may be sending, based on the PIN profile, a PIN service discovery response message corresponding to the PIN service discovery request message to a fourth device. For example, relevant information of the service requested by the PIN service discovery request message is determined from the PIN profile, and a PIN service discovery response message including the relevant information is returned to the fourth device. For example, PINE information, application client information, or the like of the requested service is returned to the fourth device.

In some implementations, the PIN service discovery response message may carry the first list.

In this implementation, since the PIN service discovery request message is responded to based on the PIN profile, the PIN service discovery request message can be responded to more accurately using the first information in the PIN profile, thereby returning accurate response information to the fourth device.

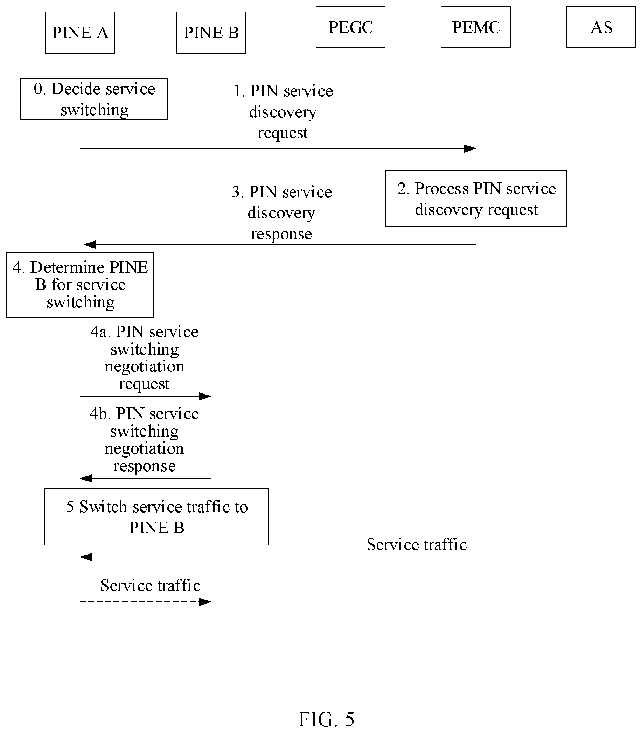

In one embodiment, before sending traffic to another PINE, a PINE needs to interact with that PINE to determine whether the PINE supports service switching. As shown in FIG. 5, the method includes the following steps.

Step 0. PINE A communicates with the application server through the application layer, and PINE A decides to switch the service to another PINE, where PINE A is already in the PIN.

Step 1. PINE A triggers a PIN service discovery request to the PEMC, and the request carries a list of services the PINE A wants to switch (list of services the PINE A wants to consume).

Step 2. Upon receiving the request, a PEMC performs an authorization check to verify whether the PINE A has authorization to perform the operation.

Step 3. The PEMC, based on the PIN profile, provides a list of PINE endpoints, application client endpoints information that are providing the requested services to the PINE A in the PIN service discovery response. The PIN service may be represented by the service type that the PINE provides or the application clients on the PINE. If the request fails, the PEMC shall give a failure response to indicate the cause of the request failure.

Step 4. The PINE A determines a PINE B for service switching, as follows.

The PINE A maintains a service toward the AS, and the service corresponds to a service type, such as music or streaming. The PINE A determines a potential PINE B for service switching based on whether the PINE has the capability to bear the service, whether the PINE and PINE A deploy the same application client, whether the PINE A and the PINE B are within the coverage of the same PEGC, or whether there is a direct connection between the PINE A and PEGC.

Step 4a. After determining the PINE B for service switching, the PINE A sends a PIN service switching negotiation request to the PINE B. The request carries a PIN ID, a requester ID, and service information (such as PIN service type and PIN service feature).

Step 4b. Upon receiving the request, the PINE B decides whether to accept the PIN service switching negotiation request. If the request fails, the PINE B shall give a failure response to indicate the cause of the request failure.

Steps 4a and 4b increases the interaction between PINE A and PINE B. In the case of not agreeing to perform service switching, a cause value is carried, and the cause value indicates the cause of not agreeing to perform service switching. Optionally, the cause value indicates at least one of the following: insufficient resources, operation not allowed, or authorization failure.

Step 5. Taking PINE B as an example, the PINE switches the service traffic to the PINE B: The PINE A switches the flow directly to the PINE B through direct communication or PEGC.

In an optional implementation, the method further includes:
receiving, by the first device, a PIN service discovery request message sent by a fourth device; and
sending, by the first device, a PIN service discovery response message to the fourth device, where the PIN service discovery response message includes a first list, and the first list is a list of devices satisfying a first condition; where
the first condition includes at least one of the following:
   having a direct connection to the fourth device;
   having a first application client, the first application client including: an application client deployed by the fourth device or an application client corresponding to a switching service; or
   supporting service switching.

In this implementation, the first device may be a PEMC, and the fourth device is a device requesting service switching.

The PIN service discovery request message may be used for requesting information of the service requested by the fourth device, such as information of the service for which the fourth device requests service switching.

The first list may be the same list as the first list in the above implementation, or the first list may be a different list from the first list in the above implementation, such as the first list in the above implementation may be a list determined based on the PIN profile, and the first list in this implementation is a list determined based on the first condition, or the first list in this implementation is a list determined based on the PIN profile and the first condition.

The first condition may be a condition defined by a protocol or configured by a network side, or a condition determined by the first device.

The first application client including an application client deployed by the fourth device may be understood as that devices in the first list and the fourth device are capable of having the same application client.

The first application client including an application client corresponding to a switching service can be understood as that devices in the first list are capable of deploying an application client corresponding to the switching service, where the application client corresponding to the switching service may be an application client corresponding to the service to be switched during the service switching, that is, the application client is used for processing the service to be switched during the service switching.

In this implementation, since the devices in the first list satisfy the first condition, the first list returned by the first device to the fourth device can enable the fourth device to complete service switching more reliably, to improve PIN service performance. For example, the fourth device can directly perform service switching for devices in the first list.

Optionally, the supporting service switching includes:
accepting a second request message sent by the first device, the second request message being used for negotiating service switching in the PIN.

For example, after determining devices having a direct connection to the fourth device or capable of deploying the first application client, the first device sends a second request message to these devices, and these devices reply to the first device with acceptance or rejection upon receiving the second request message.

Optionally, the second request message includes at least one of the following:
a PIN identifier, identification information of the fourth device, the first information, or a security credential, where the security credential is used for an authorization or authentication procedure of the service switching.

In this implementation, since the first request message includes at least one of the above PIN identifier, the identification information of the fourth device, the first information, and the security credential, devices in the first list are enabled to better determine whether to accept the first request message, so that service switching can be performed more reliably.

In some implementations, agreeing to service switching may alternatively be pre-configured. For example, some devices may indicate in advance to the first device that switching is agreed to by default.

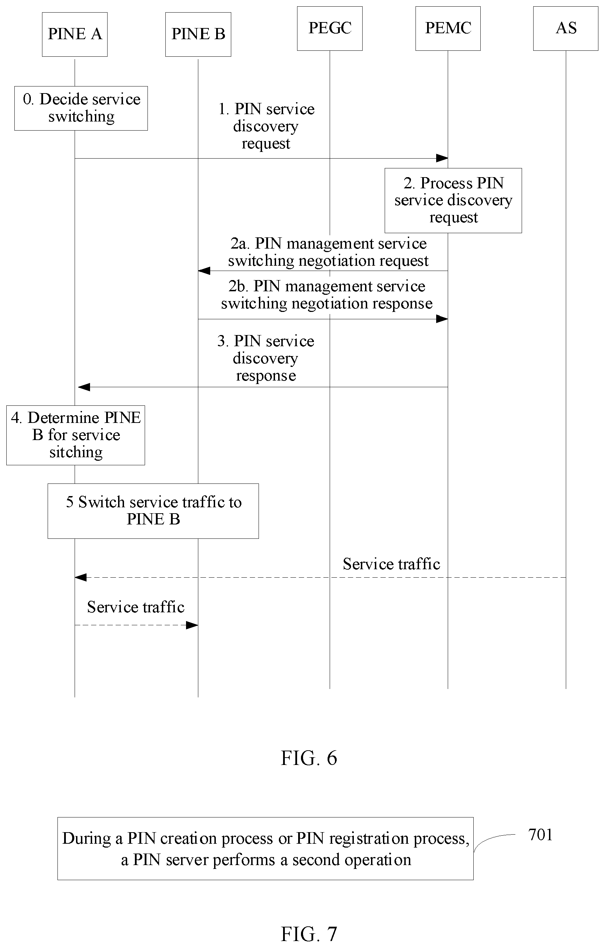

In one embodiment, before sending a list supporting service switching of PINE A, the PEMC needs to interact with a candidate PINE B to determine whether the PINE B supports service switching. As shown in FIG. 6, the method includes the following steps.

Step 0. PINE A communicates with the application server through the application layer, and PINE A decides to switch the service to another PINE, where PINE A is already in the PIN.

Step 1. PINE A triggers a PIN service discovery request to the PEMC, and the request carries a list of services that PINE A wants to consume (list of services the PINE A wants to consume).

Step 2. Upon receiving the request, the PEMC performs an authorization check to verify whether the PINE A has authorization to perform the operation.

Step 2a. The PEMC determines a list of PINE endpoints to which service traffic (service traffic) from the PINE A may be switched (that is, the first list described above, for example, including PINE B). The PEMC considers the following conditions to determine a list of PINE endpoints (taking PINE B as an example): whether the PINE A and PINE B have direct communication, whether the PINE A and PINE B deploy the same application client capable of receiving switched traffic (switched traffic).

In some implementations, the PEMC sends a PIN management service switching negotiation request to a target PIN client to confirm whether the target PIN client accepts the service switching request. The PIN management service switching negotiation request message includes information such as requester identifier, security credential, service information, and PIN ID.

The PEMC sends the PIN management service switching negotiation request to all PINEs in the list of PINE endpoints.

Step 2b. The target PIN client confirms whether to accept the service switching and responds to the PEMC. If the request fails, the PINE B should give a failure response to indicate the cause of the request failure.

Step 3. The PEMC provides PINE endpoints in a PIN service discovery response, and accepts a list of application client endpoint information that are providing the requested services to the PINE A. The PIN service may be represented by a service type provided by a PINE or by an application client on a PINE. If the request fails, the PEMC shall give a failure response to indicate the cause of the request failure.

Step 4. The PINE A determines a PINE B for service switching, as follows.

The PINE A maintains a service toward the AS, and the service corresponds to a service type, such as music or streaming. The PINE A determines a potential PINE B for service switching based on whether the PINE has the capability to bear the service, whether the PINE and PINE A deploy the same application client, whether the PINE A and the PINE B are within the coverage of the same PEGC, or whether there is a direct connection between the PINE A and the PEGC.

Step 5. Taking PINE B as an example, the PINE switches the service traffic (service traffic) to the PINE B, where the PINE A switches a traffic flow (traffic flow) directly to the PINE B through direct communication or the PEGC.

In some implementations, the PINE A switching the traffic flow to the PINE B of step 5 includes:
The application server sends the traffic flow to the PINE A through the PEGC. When receiving the traffic flow of a specific application destined for PINE A, the PEGC directly sends the traffic flow to the PINE B. In this implementation, the data flow sent by the specific application to the PINE A is directly sent to PINE B through the PEGC, and the PINE A no longer receives a flow from the specific application, thereby implementing service switching from the PINE A to the PINE B.

In the embodiments of the present application, during a PIN creation procedure or PIN registration procedure, a first device performs a first operation; where the first operation includes at least one of the following: receiving a first message from a PIN server, the first message including first information; or sending a second message to the PIN server, the second message including the first information; where the first information includes at least one of the following: PIN service information; service information of the first device; or PIN description information. Since the first device performs the first operation during the PIN creation procedure or PIN registration procedure, synchronization of relevant information of the PIN can be achieved during the PIN creation procedure or PIN registration procedure through at least one of the above first message and second message, thereby avoiding the problem that the inability to synchronize relevant information of the PIN in a timely manner affects PIN service performance, and further improving PIN service performance.

Referring to FIG. 7, FIG. 7 is a flowchart of another information synchronization method according to an embodiment of the present application. As shown in FIG. 7, the method includes the following step:
step 701: performing, by a PIN server, a second operation during a PIN creation procedure or PIN registration procedure; where
the second operation includes at least one of the following:
   sending a first message to a first device, the first message including first information; or
   receiving a second message from the first device, the second message including the first information; where
   the first information includes at least one of the following:
      PIN service information;
      service information of the first device; or
      PIN description information.

Optionally, the sending a first message to a first device includes:
sending a PIN creation response message to the first device, the PIN creation response message including the first information.

Optionally, the PIN creation response message carries a PIN profile, the PIN profile including the first information.

Optionally, the method further includes:
obtaining, by the PIN server, the first information through an application layer message or subscription information.

Optionally, the receiving a second message from a first device includes:
receiving a PIN creation request message from the first device, the PIN creation request message including the first information.

Optionally, the receiving a second message from a first device includes:
receiving a PIN registration request message from the first device, the PIN registration request message including the first information.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

It should be noted that this embodiment serves as an implementation of the PIN server corresponding to the embodiment shown in FIG. 2, and for specific implementation, reference may be made to the relevant description of the embodiment shown in FIG. 2. To avoid repetition, details are not repeated here for this embodiment.

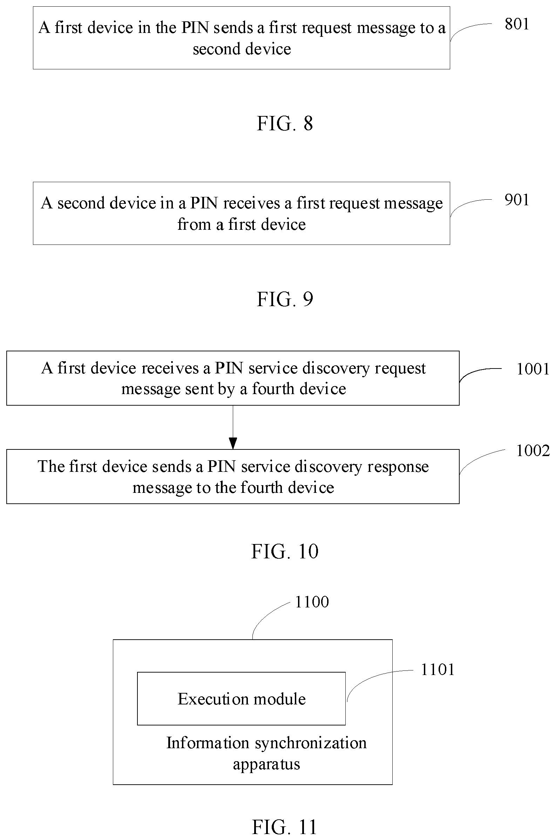

Referring to FIG. 8, FIG. 8 is a flowchart of a service switching method according to an embodiment of the present application. As shown in FIG. 8, the method includes the following step:
step 801: sending, by a first device in a PIN, a first request message to a second device, the first request message being used for negotiating service switching in the PIN.

The first device may be the first device in the embodiment shown in FIG. 2, and for specific implementation in this embodiment, reference may be made to the embodiment shown in FIG. 2, and details are not repeated here.

Optionally, the method further includes:
receiving, by the first device, a first response message from the second device, the first response message being used for indicating acceptance or rejection of the first request message.

Optionally, the first request message includes at least one of the following:
a PIN identifier, identification information of the first device, or first information; where
the first information includes at least one of the following:
   PIN service information;
   service information of the first device; or
   PIN description information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the method further includes:
determining, by the first device, the second device, the second device satisfying at least one of the following:
being within coverage of a same PIN element with gateway capability PEGC as the first device; or
having a direct connection to the first device.

Optionally, in a case that the first response message indicates rejection of the first request message, the method further includes at least one of the following:
determining, by the first device, a third device based on a first list; or
terminating the PIN service switching procedure when there is no available third device in the first list; where
the third device is used for service switching in the PIN, and the first list is a list of devices supporting service switching in the PIN.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

In this embodiment, negotiation with the second device before service switching can be achieved through the first request message, thereby avoiding the problem that PIN service performance is affected due to the inability of devices to negotiate before service switching, and further improving PIN service performance.

It should be noted that this embodiment serves as an implementation of the first device corresponding to the embodiment shown in FIG. 2, and for specific implementation, reference may be made to the relevant description of the embodiment shown in FIG. 2. To avoid repetition, details are not repeated here for this embodiment.

Referring to FIG. 9, FIG. 9 is a flowchart of another service switching method according to an embodiment of the present application. As shown in FIG. 9, the method includes the following step:
step 901: receiving, by a second device in a PIN, a first request message from a first device, the first request message being used for negotiating service switching in the PIN.

Optionally, the method further includes:
sending, by the second device, a first response message to the first device, the first response message being used for indicating acceptance or rejection of the first request message.

Optionally, the first request message includes at least one of the following:
a PIN identifier, identification information of the first device, or first information; where
the first information includes at least one of the following:
   PIN service information;
   service information of the first device; or
   PIN description information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

It should be noted that this embodiment serves as an implementation on the second device corresponding to the embodiment shown in FIG. 2, and for specific implementation, reference may be made to the relevant description of the embodiment shown in FIG. 2. To avoid repetition, details are not repeated here for this embodiment.

Referring to FIG. 10, FIG. 10 is a flowchart of another service switching method according to an embodiment of the present application. As shown in FIG. 10, the method includes the following steps:
step 1001: receiving, by a first device, a PIN service discovery request message sent by a fourth device; and
step 1002: sending, by the first device, a PIN service discovery response message to the fourth device, the PIN service discovery response message including a first list; where
the first list is a list of devices supporting service switching in the PIN, the first list is determined based on first information, and the first information includes at least one of the following:
   PIN service information;
   service information of the first device; or
   PIN description information;
   or, the first list is a list of devices satisfying a first condition; where
   the first condition includes at least one of the following:
      having a direct connection to the fourth device;
      having a first application client, the first application client including: an application client deployed by the fourth device or an application client corresponding to a switching service; or
      supporting service switching.

Optionally, the supporting service switching includes:
accepting a second request message sent by the first device, the second request message being used for negotiating service switching in the PIN.

Optionally, the second request message includes at least one of the following:
a PIN identifier, identification information of the fourth device, the first information, or a security credential, where the security credential is used for an authorization or authentication procedure of the service switching.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

It should be noted that this embodiment serves as an implementation of the first device corresponding to the embodiment shown in FIG. 2, and for specific implementation, reference may be made to the relevant description of the embodiment shown in FIG. 2. To avoid repetition, details are not repeated here for this embodiment.

The information synchronization method provided in the embodiments of the present application may be performed by an information synchronization apparatus. In the embodiments of the present application, the information synchronization apparatus performing the information synchronization method is taken as an example to illustrate the information synchronization apparatus provided in the embodiments of the present application.

The service switching method provided in the embodiments of the present application may be performed by a service switching apparatus. In the embodiments of the present application, the service switching apparatus performing the service switching method is taken as an example to illustrate the service switching apparatus provided in the embodiments of the present application.

The request processing method provided in the embodiments of the present application may be performed by a request processing apparatus. In the embodiments of the present application, the request processing apparatus performing the request processing method is taken as an example to illustrate the request processing apparatus provided in the embodiments of the present application.

Referring to FIG. 11, FIG. 11 is a structural diagram of an information synchronization apparatus according to an embodiment of the present application. As shown in FIG. 11, the information synchronization apparatus 1100 includes:
an execution module 1101, configured to perform a first operation during a personal Internet of Things network PIN creation procedure or PIN registration procedure; where
the first operation includes at least one of the following:
   receiving a first message from a PIN server, the first message including first information; or
   sending a second message to the PIN server, the second message including the first information; where
   the first information includes at least one of the following:
      PIN service information;
      service information of the first device; or
      PIN description information.

Optionally, the receiving a first message from a PIN server includes:
receiving a PIN creation response message from the PIN server, the PIN creation response message including the first information.

Optionally, the PIN creation response message carries a PIN profile, the PIN profile including the first information.

Optionally, the sending a second message to the PIN server includes:
sending a PIN creation request message to the PIN server, the PIN creation request message including the first information.

Optionally, the sending a second message to the PIN server includes:
sending a PIN registration request message to the PIN server, the PIN registration request message including the first information.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

Optionally, the apparatus further includes:
a first sending module, configured to send a first request message to a second device, the first request message being used for negotiating service switching in the PIN.

Optionally, the method further includes:
a first receiving module, configured to receive a first response message from the second device, the first response message being used for indicating acceptance or rejection of the first request message.

Optionally, the first request message includes at least one of the following:
a PIN identifier, identification information of the first device, or the first information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the apparatus further includes:
a first determination module, configured to determine the second device, the second device satisfying at least one of the following:
being within coverage of a same PIN element with gateway capability PEGC as the first device; or
having a direct connection to the first device.

Optionally, in a case that the first response message indicates rejection of the first request message, the apparatus further includes at least one of the following:
a second determination module, configured to determine a third device based on a first list; or
a termination module, configured to terminate the PIN service switching procedure when there is no available third device in the first list; where
the third device is used for service switching in the PIN, and the first list is a list of devices supporting service switching in the PIN.

Optionally, the apparatus further includes:
a second receiving module, configured to receive a PIN service discovery request message sent by a fourth device; and
a response module, configured to respond to the PIN service discovery request message based on a PIN profile; where
the PIN profile includes the first information.

Optionally, the apparatus further includes:
a fourth receiving module, configured to receive a PIN service discovery request message sent by a fourth device; and
a second sending module, configured to send a PIN service discovery response message to the fourth device, where the PIN service discovery response message includes a first list, and the first list is a list of devices satisfying a first condition; where
the first condition includes at least one of the following:
   having a direct connection to the fourth device;
   having a first application client, the first application client including: an application client deployed by the fourth device or an application client corresponding to a switching service; or
   supporting service switching.

Optionally, the supporting service switching includes:
accepting a second request message sent by the first device, the second request message being used for negotiating service switching in the PIN.

Optionally, the second request message includes at least one of the following:
a PIN identifier, identification information of the fourth device, the first information, or a security credential, where the security credential is used for an authorization or authentication procedure of the service switching.

The information synchronization apparatus can improve PIN service performance.

The information synchronization apparatus in this embodiment of the present application may be an electronic device, such as an electronic device with an operating system, or a component in an electronic device, such as an integrated circuit or chip. For example, the electronic device may be a terminal, or a device other than a terminal. By way of example, the terminal may include, but is not limited to, the types of terminals listed in the embodiments of the present application, and the other device may be a server, network attached storage (Network Attached Storage, NAS), and the like. This is not specifically limited in this embodiment of the present application.

The information synchronization apparatus provided by embodiments of the present application can implement various processes implemented by the method embodiment shown in FIG. 2, with the same technical effects achieved. To avoid repetition, details are not repeated here.

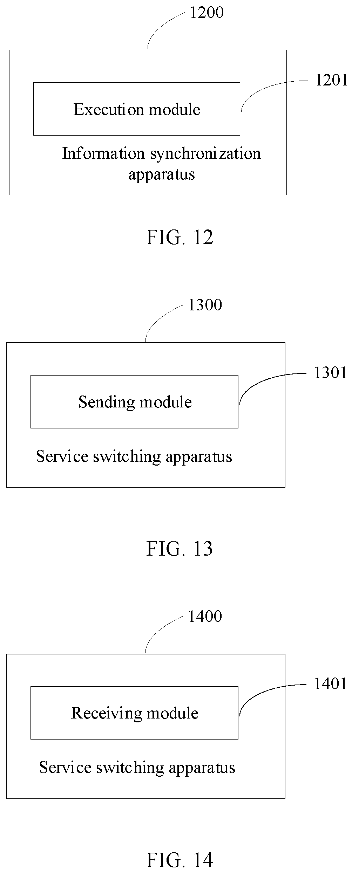

Referring to FIG. 12, FIG. 12 is a structural diagram of another information synchronization apparatus according to an embodiment of the present application. As shown in FIG. 12, the information synchronization apparatus 1200 includes:
an execution module 1201, configured to perform a second operation during a personal Internet of Things network PIN creation procedure or PIN registration procedure; where
the second operation includes at least one of the following:
   sending a first message to a first device, the first message including first information; or
   receiving a second message from the first device, the second message including the first information; where
   the first information includes at least one of the following:
      PIN service information;
      service information of the first device; or
      PIN description information.

Optionally, the sending a first message to a first device includes:
sending a PIN creation response message to the first device, the PIN creation response message including the first information.

Optionally, the PIN creation response message carries a PIN profile, the PIN profile including the first information.

Optionally, the apparatus further includes:
an acquisition module, configured to obtain the first information through an application layer message or subscription information.

Optionally, the receiving a second message from a first device includes:
receiving a PIN creation request message from the first device, the PIN creation request message including the first information.

Optionally, the receiving a second message from a first device includes:
receiving a PIN registration request message from the first device, the PIN registration request message including the first information.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

The information synchronization apparatus can improve PIN service performance.

The information synchronization apparatus in this embodiment of the present application may be an electronic device, such as an electronic device with an operating system, or a component in an electronic device, such as an integrated circuit or chip. The electronic device may be a terminal or a network-side device.

The information synchronization apparatus provided in this embodiment of the present application can implement the processes implemented by the method embodiment shown in FIG. 7, with the same technical effects achieved. To avoid repetition, details are not repeated here.

Referring to FIG. 13, FIG. 13 is a structural diagram of a service switching apparatus according to an embodiment of the present application. As shown in FIG. 13, the service switching apparatus 1300 includes:
a sending module 1301, configured to send a first request message to a second device, where the first request message is used for negotiating service switching in a PIN, and a device corresponding to the apparatus is a device in a personal Internet of Things network PIN.

Optionally, the apparatus further includes:
a first receiving module, configured to receive a first response message from the second device, the first response message being used for indicating acceptance or rejection of the first request message.

Optionally, the first request message includes at least one of the following:
a PIN identifier, identification information of the first device, or first information; where
the first information includes at least one of the following:
   PIN service information;
   service information of the first device; or
   PIN description information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the apparatus further includes:
a first determination module, configured to determine the second device, the second device satisfying at least one of the following:
being within coverage of a same PIN element with gateway capability PEGC as the first device; or
having a direct connection to the first device.

Optionally, in a case that the first response message indicates rejection of the first request message, the apparatus further includes at least one of the following:
a second module, configured to determine a third device based on a first list; or
a termination module, configured to terminate the PIN service switching procedure when there is no available third device in the first list; where
the third device is used for service switching in the PIN, and the first list is a list of devices supporting service switching in the PIN.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

The service switching apparatus can improve PIN service performance.

The service switching apparatus in this embodiment of the present application may be an electronic device, such as an electronic device with an operating system, or a component in an electronic device, such as an integrated circuit or chip. For example, the electronic device may be a terminal, or a device other than a terminal. By way of example, the terminal may include, but is not limited to, the types of terminals listed in the embodiments of the present application, and the other device may be a server, network attached storage (Network Attached Storage, NAS), and the like. This is not specifically limited in this embodiment of the present application.

The service switching apparatus provided in this embodiment of the present application can implement the processes implemented by the method embodiment shown in FIG. 8, with the same technical effects achieved. To avoid repetition, details are not repeated here.

Referring to FIG. 14, FIG. 14 is a structural diagram of another service switching apparatus according to an embodiment of the present application. As shown in FIG. 14, the service switching apparatus 1400 includes:
a receiving module 1401, configured to receive a first request message from a first device, where the first request message is used for negotiating service switching in a PIN, and a device corresponding to the apparatus is a device in a personal Internet of Things network PIN.

Optionally, the apparatus further includes:
a sending module, configured to send a first response message to the first device, the first response message being used for indicating acceptance or rejection of the first request message.

Optionally, the first request message includes at least one of the following:
a PIN identifier, identification information of the first device, or first information; where
the first information includes at least one of the following:
   PIN service information;
   service information of the first device; or
   PIN description information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

The service switching apparatus can improve PIN service performance.

The service switching apparatus in this embodiment of the present application may be an electronic device, such as an electronic device with an operating system, or a component in an electronic device, such as an integrated circuit or chip. For example, the electronic device may be a terminal, or a device other than a terminal. By way of example, the terminal may include, but is not limited to, the types of terminals listed in embodiments of the present application, and the other device may be a server, NAS, and the like. This is not specifically limited in this embodiment of the present application.

The service switching apparatus provided in this embodiment of the present application can implement the processes implemented by the method embodiment shown in FIG. 9, with the same technical effects achieved. To avoid repetition, details are not repeated here.

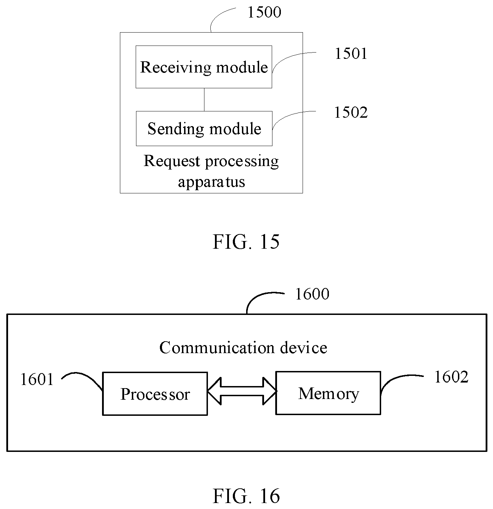

Referring to FIG. 15, FIG. 15 is a structural diagram of a request processing apparatus according to an embodiment of the present application. As shown in FIG. 15, the request processing apparatus 1500 includes:
a receiving module 1501, configured to receive a personal Internet of Things network PIN service discovery request message sent by a fourth device;
a sending module 1502, configured to send a PIN service discovery response message to the fourth device, the PIN service discovery response message including a first list; where
the first list is a list of devices supporting service switching in the PIN, the first list is determined based on first information, and the first information including at least one of the following:
   PIN service information;
   service information of the first device; or
   PIN description information;
   or, the first list is a list of devices satisfying a first condition; where
   the first condition includes at least one of the following:
      having a direct connection to the fourth device;
      having a first application client, the first application client including: an application client deployed by the fourth device or an application client corresponding to a switching service; or
      supporting service switching.

Optionally, the supporting service switching includes:
accepting a second request message sent by the first device, the second request message being used for negotiating service switching in the PIN.

Optionally, the second request message includes at least one of the following:
a PIN identifier, identification information of the fourth device, the first information, or a security credential, where the security credential is used for an authorization or authentication procedure of the service switching.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

The request processing apparatus can improve PIN service performance.

The service switching apparatus in this embodiment of the present application may be an electronic device, such as an electronic device with an operating system, or a component in an electronic device, such as an integrated circuit or chip. For example, the electronic device may be a terminal, or a device other than a terminal. By way of example, the terminal may include, but is not limited to, the types of terminals listed in embodiments of the present application, and the other device may be a server, NAS, and the like. This is not specifically limited in this embodiment of the present application.

The service switching apparatus provided in this embodiment of the present application can implement the processes implemented by the method embodiment shown in FIG. 10, with the same technical effects achieved. To avoid repetition, details are not repeated here.

As shown in FIG. 16, an embodiment of the present application further provides a communication device 1600, including a processor 1601 and a memory 1602. A program or an instruction capable of running on the processor 1601 are stored on the memory 1602. For example, when the communication device 1600 is a first device, the program or instruction is executed by the processor 1601 to implement the steps of the above embodiment of the information synchronization method or service switching method or request processing method, with the same technical effects achieved. When the communication device 1600 is a PIN server, the program or instruction is executed by the processor 1601 to implement the steps of the above embodiment of the information synchronization method, with the same technical effects achieved. When the communication device 1600 is a second device, the program or instruction is executed by the processor 1601 to implement the steps of the above embodiment of the service switching method, with the same technical effects achieved. To avoid repetition, details are not repeated here.

An embodiment of the present application further provides a device, including a processor and a communication interface. The communication interface is coupled to the processor, and the processor is configured to run a program or an instruction to implement the steps in the embodiment of the information synchronization method shown in FIG. 2, or implement the steps in the embodiment of the service switching method shown in FIG. 8 or 9, or implement the steps in the embodiment of the request processing method shown in FIG. 10. This terminal embodiment corresponds to the above method embodiment on the first device side. All implementation processes and implementations of the above method embodiments are applicable to this first embodiment, with the same technical effects achieved.

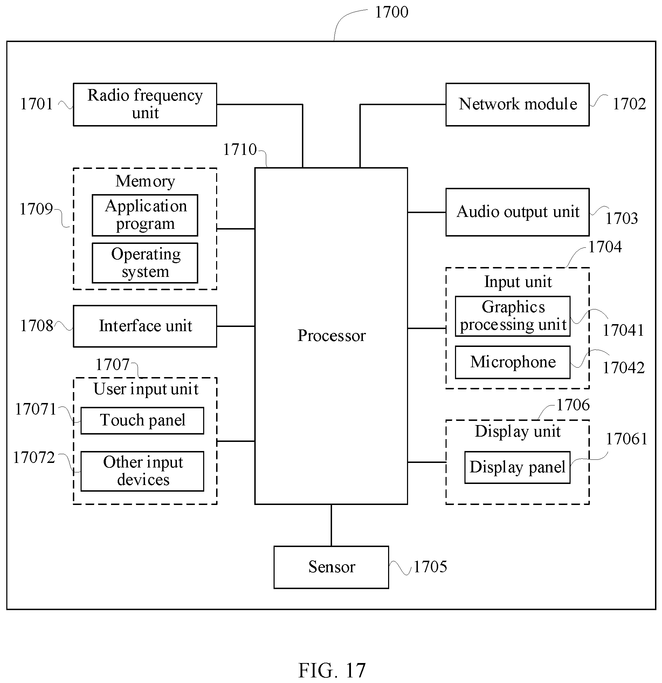

Specifically, FIG. 17 is a schematic diagram of a hardware structure of a device for implementing embodiments of the present application, and the device is a first device or a second device.

The device 1700 includes, but is not limited to, at least part of components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

Those skilled in the art can understand that the device 1700 may further include a power supply (such as a battery) for supplying power to the components, and the power supply may be logically connected to the processor 1710 through a power management system, thereby implementing functions such as charging, discharging, and power consumption management through the power management system. The device structure shown in FIG. 17 does not constitute a limitation to the device, and the device may include more or fewer components than those shown in the figure, or some components may be combined, or there may be a different component layout. Details are not described now.

It should be understood that in this embodiment of the present application, the input unit 1704 may include a graphics processing unit (Graphics Processing Unit, GPU) 17041 and a microphone 17042, and the graphics processing unit 17041 processes image data of still pictures or videos obtained by an image capture apparatus (such as a camera) in a video capture mode or an image capture mode. The display unit 1706 may include a display panel 17061, and the display panel 17061 may be configured in a form of a liquid crystal display, an organic light-emitting diode, and the like. The user input unit 1707 includes at least one of a touch panel 17071 and other input devices 17072. The touch panel 17071 is also referred to as a touch screen. The touch panel 17071 may include two parts: a touch detection apparatus and a touch controller. Other input devices 17072 may include, but are not limited to, a physical keyboard, a function key (for example, a volume control key or a power on/off key), a trackball, a mouse, and a joystick. Details are not described herein.

In this embodiment of the present application, the radio frequency unit 1701 receives downlink data from a network-side device and sends the downlink data to the processor 1710 for processing; and the radio frequency unit 1701 also sends uplink data to the network-side device. Generally, the radio frequency unit 1701 includes, but is not limited to, an antenna, an amplifier, a transceiver, a coupler, a low noise amplifier, and a duplexer.

The memory 1709 may be configured to store software programs or instructions and various data. The memory 1709 may mainly include a first storage area for storing programs or instructions and a second storage area for storing data. The first storage area may store an operating system, an application or instructions required by at least one function (for example, a sound playback function or an image playback function). In addition, the memory 1709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1709 in this embodiment of the present application includes, but is not limited to, these and any other suitable types of memories.

The processor 1710 may include one or more processing units. Optionally, the processor 1710 integrates an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1710.

It should be noted that, in this embodiment, the first device is described by way of example as a conventional communication terminal, and this embodiment of the present application does not limit the first device to any specific structure.

In an embodiment where the above device is a first device:
the radio frequency unit 1701 is configured to perform a first operation during a PIN creation procedure or PIN registration procedure; where
the first operation includes at least one of the following:
   receiving a first message from a PIN server, the first message including first information; or
   sending a second message to the PIN server, the second message including the first information; where
   the first information includes at least one of the following:
      PIN service information;
      service information of the first device; or
      PIN description information.

Optionally, the receiving a first message from a PIN server includes:
receiving a PIN creation response message from the PIN server, the PIN creation response message including the first information.

Optionally, the PIN creation response message carries a PIN profile, the PIN profile including the first information.

Optionally, the sending a second message to the PIN server includes:
sending a PIN creation request message to the PIN server, the PIN creation request message including the first information.

Optionally, the sending a second message to the PIN server includes:
sending a PIN registration request message to the PIN server, the PIN registration request message including the first information.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

Optionally, the radio frequency unit 1701 is further configured to:
send a first request message to a second device, the first request message being used for negotiating service switching in the PIN.

Optionally, the radio frequency unit 1701 is further configured to:
receive a first response message from the second device, the first response message being used for indicating acceptance or rejection of the first request message.

Optionally, the first request message includes at least one of the following:
a PIN identifier, identification information of the first device, or first information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the processor 1710 is configured to:
determine the second device, the second device satisfying at least one of the following:
being within coverage of a same PIN element with gateway capability PEGC as the first device; or
having a direct connection to the first device.

Optionally, in a case that the first response message indicates rejection of the first request message, the processor 1710 is further configured to perform at least one of the following:
determining a third device based on a first list; or
terminating the PIN service switching procedure when there is no available third device in the first list; where
the third device is used for service switching in the PIN, and the first list is a list of devices supporting service switching in the PIN.

Optionally, the radio frequency unit 1701 is further configured to:
receive a PIN service discovery request message sent by a fourth device; and
respond to the PIN service discovery request message based on a PIN profile; where
the PIN profile includes the first information.

Optionally, the radio frequency unit 1701 is further configured to:
receive a PIN service discovery request message sent by a fourth device; and
send a PIN service discovery response message to the fourth device, where the PIN service discovery response message includes a first list, and the first list is a list of devices satisfying a first condition; where
the first condition includes at least one of the following:
   having a direct connection to the fourth device;
   having a first application client, the first application client including: an application client deployed by the fourth device or an application client corresponding to a switching service; or
   supporting service switching.

Optionally, the supporting service switching includes:
accepting a second request message sent by the first device, the second request message being used for negotiating service switching in the PIN.

Optionally, the second request message includes at least one of the following:
a PIN identifier, identification information of the fourth device, the first information, or a security credential, where the security credential is used for an authorization or authentication procedure of the service switching.

In an embodiment where the above device is a first device:
the radio frequency unit 1701 is configured to send a first request message to a second device, the first request message being used for negotiating service switching in the PIN.

Optionally, the radio frequency unit 1701 is further configured to:
receive a first response message from the second device, the first response message being used for indicating acceptance or rejection of the first request message.

Optionally, the first request message includes at least one of the following:
a PIN identifier, identification information of the first device, or first information; where
the first information includes at least one of the following:
   PIN service information;
   service information of the first device; or
   PIN description information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the processor 1710 is configured to:
determine the second device, the second device satisfying at least one of the following:
being within coverage of a same PIN element with gateway capability PEGC as the first device; or
having a direct connection to the first device.

Optionally, in a case that the first response message indicates rejection of the first request message, the processor 1710 is further configured to perform at least one of the following:
determining a third device based on a first list; or
terminating the PIN service switching procedure when there is no available third device in the first list; where
the third device is used for service switching in the PIN, and the first list is a list of devices supporting service switching in the PIN.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

In an embodiment where the above device is a second device:
the radio frequency unit 1701 is configured to receive a first request message from a first device, the first request message being used for negotiating service switching in the PIN.

Optionally, the radio frequency unit 1701 is further configured to:
send a first response message to the first device, the first response message being used for indicating acceptance or rejection of the first request message.

Optionally, the first request message includes at least one of the following:
a PIN identifier, identification information of the first device, or first information; where
the first information includes at least one of the following:
   PIN service information;
   service information of the first device; or
   PIN description information.

Optionally, in a case that the first response message indicates rejection of the first request message, the first response message includes a cause value, the cause value being used for indicating at least one of the following:
insufficient resources, inability to perform a corresponding service operation, or authorization failure.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

In an embodiment where the above device is a first device:
the radio frequency unit 1701 is configured to receive a personal Internet of Things network PIN service discovery request message sent by a fourth device; and
the first device sends a PIN service discovery response message to the fourth device, the PIN service discovery response message including a first list; where
the first list is a list of devices supporting service switching in the PIN, the first list is determined based on first information, and the first information includes at least one of the following:
   PIN service information;
   service information of the first device; or
   PIN description information;
   or, the first list is a list of devices satisfying a first condition; where
   the first condition includes at least one of the following:
      having a direct connection to the fourth device;
      having a first application client, the first application client including: an application client deployed by the fourth device or an application client corresponding to a switching service; or
      supporting service switching.

Optionally, the supporting service switching includes:
accepting a second request message sent by the first device, the second request message being used for negotiating service switching in the PIN.

Optionally, the second request message includes at least one of the following:
a PIN identifier, identification information of the fourth device, the first information, or a security credential, where the security credential is used for an authorization or authentication procedure of the service switching.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

The above device can improve PIN service performance.

It can be understood that for implementation processes of the implementations mentioned in this embodiment, reference may be made to the relevant descriptions of the above embodiment of the information synchronization method or service switching method, with the same or corresponding technical effects achieved. To avoid repetition, details are not repeated here.

An embodiment of the present application further provides a device, including a processor and a communication interface. The communication interface is coupled to the processor, and the processor is configured to run a program or an instruction to implement the steps in the embodiment of the information synchronization method shown in FIG. 7. This device embodiment corresponds to the above method embodiment on the PIN server side. All implementation processes and implementations of the above method embodiment are applicable to this network-side device embodiment, with the same technical effects achieved.

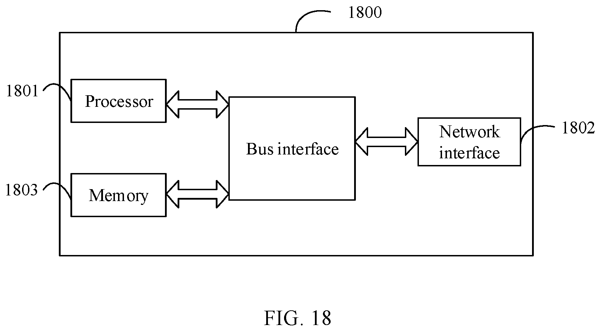

Specifically, an embodiment of the present application further provides a device. As shown in FIG. 18, the network-side device 1800 includes a processor 1801, a network interface 1802, and a memory 1803. The network interface 1802 is, for example, a common public radio interface (Common Public Radio Interface, CPRI).

Specifically, the device 1800 in this embodiment of the present application further includes: an instruction or a program stored on the memory 1803 and capable of running on the processor 1801. The processor 1801 calls the instruction or program in the memory 1803 to perform the methods performed by the modules shown in FIG. 10, with the same technical effects achieved. To avoid repetition, details are not repeated here.

The network interface 1802 is configured to perform a second operation during a PIN creation procedure or PIN registration procedure; where
the second operation includes at least one of the following:
sending a first message to a first device, the first message including first information; or
receiving a second message from the first device, the second message including the first information; where
the first information includes at least one of the following:
   PIN service information;
   service information of the first device; or
   PIN description information.

Optionally, the sending a first message to a first device includes:
sending a PIN creation response message to the first device, the PIN creation response message including the first information.

Optionally, the PIN creation response message carries a PIN profile, the PIN profile including the first information.

Optionally, the processor 1801 is further configured to:
obtain the first information through an application layer message or subscription information.

Optionally, the receiving a second message from a first device includes:
receiving a PIN creation request message from the first device, the PIN creation request message including the first information.

Optionally, the receiving a second message from a first device includes:
receiving a PIN registration request message from the first device, the PIN registration request message including the first information.

Optionally, the PIN service information includes at least one of the following:
a service provider identifier of a service provided by the PIN;
a service type of a service provided by the PIN; or
a service feature of a service provided by the PIN.

Optionally, the service information of the first device includes at least one of the following:
a service provider identifier of a service provided by the first device;
a service type of a service provided by the first device; or
a service feature of a service provided by the first device.

The above device can improve PIN service performance.

It can be understood that for the implementation processes of the implementations provided in this embodiment, reference may be made to the relevant descriptions of the above method embodiments, with the same or corresponding technical effects achieved. To avoid repetition, details are not repeated here.

An embodiment of the present application further provides a readable storage medium where a program or an instruction is stored, and when the program or instruction is executed by a processor, the processes of the above embodiment of the information synchronization method or service switching method or request processing method are implemented, with the same technical effects achieved. To avoid repetition, details are not repeated here.

The processor is a processor in the terminal described in the above embodiments. The readable storage medium includes a computer readable storage medium such as a computer read-only memory ROM, a random access memory RAM, a magnetic disk, or an optical disc. In some examples, the readable storage medium may be a non-transitory readable storage medium.

An embodiment of the present application further provides a chip, where the chip includes a processor and a communication interface, the communication interface is coupled to the processor, and the processor is configured to run a program or an instruction to implement the processes of the above embodiment of the information synchronization method or service switching method or request processing method, with the same technical effects achieved. To avoid repetition, details are not repeated here.

It should be understood that the chip mentioned in this embodiment of the present application may alternatively be referred to as a system-level chip, a system chip, a chip system, or a system-on-chip.

An embodiment of the present application further provides a computer program/program product, where the computer program/program product is stored in a storage medium, and the computer program/program product is executed by at least one processor to implement the processes of the above embodiment of the information synchronization method or service switching method or request processing method, with the same technical effects achieved. To avoid repetition, details are not repeated here.

An embodiment of the present application further provides a wireless communication system including: a first device and a PIN server, where the first device may be configured to perform the steps of the information synchronization method on the first device side as provided in the embodiments of the present application, and the PIN server may be configured to perform the steps of the information synchronization method on the PIN server side provided by embodiments of the present application.

An embodiment of the present application further provides a wireless communication system including a first device and a second device, where the first device may be configured to perform the steps of the service switching method on the first device side as provided in the embodiments of the present application, or the first device may be configured to perform the steps of the request processing method as provided in the embodiments of the present application, and the second device may be configured to perform the steps of the service switching method on the second device side as provided in the embodiments of the present application.

It should be noted that, in this article, the terms "include", "comprise", or any other variants thereof are intended to cover non-exclusive inclusion, so that a process, method, article or apparatus including a series of elements not only includes those elements, but also includes other elements not explicitly listed, or elements inherent to such process, method, article or apparatus. Without further limitation, an element defined by the statement "including one..." does not exclude the presence of other identical elements in the process, method, article or apparatus including the element. In addition, it should be pointed out that the scope of the methods and apparatuses in the implementations of the present application are not limited to performing functions in the order shown or discussed, and may also include performing functions substantially simultaneously or in a reverse order, depending on the functions involved. For example, the described methods may be performed in an order different from the described order, and steps may be added, omitted, or combined. In addition, features described with reference to certain examples may be combined in other examples.

Through the description of the above implementation manners, those skilled in the art can clearly understand that the above embodiment methods can be implemented by means of computer software product plus a necessary general hardware platform, and certainly can also be implemented by hardware. The computer software product is stored in a storage medium (such as ROM, RAM, magnetic disk, or optical disk), including several instructions for instructing a terminal device or network-side device to perform the methods described in the embodiments of the present application.

The embodiments of the present application have been described above with reference to the accompanying drawings, but the present application is not limited to the above specific implementations. The above specific implementations are merely illustrative and not restrictive. Under the enlightenment of the present application, those of ordinary skill in the art can make many forms of implementations without departing from the purpose of the present application and the scope protected by the claims, and these implementations all fall within the protection of the present application.

## Claims

1. An information synchronization method, comprising:
performing, by a first device, a first operation during a personal Internet of Things network PIN creation procedure or PIN registration procedure; wherein
the first operation comprises at least one of the following:
receiving a first message from a PIN server, the first message comprising first information; or
sending a second message to the PIN server, the second message comprising the first information; wherein
the first information comprises at least one of the following:
PIN service information;
service information of the first device; or
PIN description information.

2. The method according to claim 1, wherein the receiving a first message from a PIN server comprises:
receiving a PIN creation response message from the PIN server, the PIN creation response message comprising the first information.

3. The method according to claim 2, wherein the PIN creation response message carries a PIN profile, the PIN profile comprising the first information.

4. The method according to any one of claims 1 to 3, wherein the sending a second message to the PIN server comprises:
sending a PIN creation request message to the PIN server, the PIN creation request message comprising the first information.

5. The method according to any one of claims 1 to 3, wherein the sending a second message to the PIN server comprises:
sending a PIN registration request message to the PIN server, the PIN registration request message comprising the first information.

6. The method according to any one of claims 1 to 5, wherein the PIN service information comprises at least one of the following:
a service provider identifier of a service provided by the PIN;
a service type of a service provided by the PIN; or
a service feature of a service provided by the PIN.

7. The method according to any one of claims 1 to 6, wherein the service information of the first device comprises at least one of the following:
a service provider identifier of a service provided by the first device;
a service type of a service provided by the first device; or
a service feature of a service provided by the first device.

8. The method according to any one of claims 1 to 7, further comprising:
sending, by the first device, a first request message to a second device, the first request message being used for negotiating service switching in the PIN.

9. The method according to claim 8, further comprising:
receiving, by the first device, a first response message from the second device, the first response message being used for indicating acceptance or rejection of the first request message.

10. The method according to claim 8 or 9, wherein the first request message comprises at least one of the following:
a PIN identifier, identification information of the first device, or the first information.

11. The method according to claim 9 or 10, wherein in a case that the first response message indicates rejection of the first request message, the first response message comprises a cause value, the cause value being used for indicating at least one of the following:
insufficient resources, inability to perform a corresponding service operation, or authorization failure.

12. The method according to any one of claims 8 to 11, further comprising:
determining, by the first device, the second device, the second device satisfying at least one of the following:
being within coverage of a same PIN element with gateway capability PEGC as the first device; or
having a direct connection to the first device.

13. The method according to any one of claims 9 to 12, wherein in a case that the first response message indicates rejection of the first request message, the method further comprises at least one of the following:
determining, by the first device, a third device based on a first list; or
terminating, by the first device, a PIN service switching procedure when there is no available third device in the first list; wherein
the third device is used for service switching in the PIN, and the first list is a list of devices supporting service switching in the PIN.

14. The method according to any one of claims 1 to 13, further comprising:
receiving, by the first device, a PIN service discovery request message sent by a fourth device; and
responding, by the first device, to the PIN service discovery request message based on a PIN profile; wherein
the PIN profile comprises the first information.

15. The method according to any one of claims 1 to 13, further comprising:
receiving, by the first device, a PIN service discovery request message sent by a fourth device; and
sending, by the first device, a PIN service discovery response message to the fourth device, wherein the PIN service discovery response message comprises a first list, and the first list is a list of devices satisfying a first condition; wherein
the first condition comprises at least one of the following:
having a direct connection to the fourth device;
having a first application client, the first application client comprising: an application client deployed by the fourth device or an application client corresponding to a switching service; or
supporting service switching.

16. The method according to claim 15, wherein the supporting service switching comprises:
accepting a second request message sent by the first device, the second request message being used for negotiating service switching in the PIN.

17. The method according to claim 16, wherein the second request message comprises at least one of the following:
a PIN identifier, identification information of the fourth device, the first information, or a security credential, wherein the security credential is used for an authorization or authentication procedure of the service switching.

18. An information synchronization method, comprising:
performing, by a personal Internet of Things network PIN server, a second operation during a PIN creation procedure or PIN registration procedure; wherein
the second operation comprises at least one of the following:
sending a first message to a first device, the first message comprising first information; or
receiving a second message from the first device, the second message comprising the first information; wherein
the first information comprises at least one of the following:
PIN service information;
service information of the first device; or
PIN description information.

19. The method according to claim 18, wherein the sending a first message to a first device comprises:
sending a PIN creation response message to the first device, the PIN creation response message comprising the first information.

20. The method according to claim 19, wherein the PIN creation response message carries a PIN profile, the PIN profile comprising the first information.

21. The method according to any one of claims 18 to 20, further comprising:
obtaining, by the PIN server, the first information through an application layer message or subscription information.

22. The method according to any one of claims 18 to 20, wherein the receiving a second message from a first device comprises:
receiving a PIN creation request message from the first device, the PIN creation request message comprising the first information.

23. The method according to any one of claims 18 to 20, wherein the receiving a second message from a first device comprises:
receiving a PIN registration request message from the first device, the PIN registration request message comprising the first information.

24. The method according to any one of claims 18 to 23, wherein the PIN service information comprises at least one of the following:
a service provider identifier of a service provided by the PIN;
a service type of a service provided by the PIN; or
a service feature of a service provided by the PIN.

25. The method according to any one of claims 18 to 24, wherein the service information of the first device comprises at least one of the following:
a service provider identifier of a service provided by the first device;
a service type of a service provided by the first device; or
a service feature of a service provided by the first device.

26. A service switching method, comprising:
sending, by a first device in a personal Internet of Things network PIN, a first request message to a second device, the first request message being used for negotiating service switching in the PIN.

27. The method according to claim 26, further comprising:
receiving, by the first device, a first response message from the second device, the first response message being used for indicating acceptance or rejection of the first request message.

28. The method according to claim 26 or 27, wherein the first request message comprises at least one of the following:
a PIN identifier, identification information of the first device, or first information; wherein
the first information comprises at least one of the following:
PIN service information;
service information of the first device; or
PIN description information.

29. The method according to claim 26 or 27, wherein in a case that the first response message indicates rejection of the first request message, the first response message comprises a cause value, the cause value being used for indicating at least one of the following:
insufficient resources, inability to perform a corresponding service operation, or authorization failure.

30. The method according to any one of claims 26 to 29, further comprising:
determining, by the first device, the second device, the second device satisfying at least one of the following:
being within coverage of a same PIN element with gateway capability PEGC as the first device; or
having a direct connection to the first device.

31. The method according to any one of claims 26 to 30, wherein in a case that the first response message indicates rejection of the first request message, the method further comprises at least one of the following:
determining, by the first device, a third device based on a first list; or
terminating a PIN service switching procedure when there is no available third device in the first list; wherein
the third device is used for service switching in the PIN, and the first list is a list of devices supporting service switching in the PIN.

32. The method according to any one of claims 27 to 31, wherein the PIN service information comprises at least one of the following:
a service provider identifier of a service provided by the PIN;
a service type of a service provided by the PIN; or
a service feature of a service provided by the PIN.

33. The method according to any one of claims 28 to 32, wherein the service information of the first device comprises at least one of the following:
a service provider identifier of a service provided by the first device;
a service type of a service provided by the first device; or
a service feature of a service provided by the first device.

34. A service switching method, comprising:
receiving, by a second device in a personal Internet of Things network PIN, a first request message from a first device, the first request message being used for negotiating service switching in the PIN.

35. The method according to claim 34, further comprising:
sending, by the second device, a first response message to the first device, the first response message being used for indicating acceptance or rejection of the first request message.

36. The method according to claim 34 or 35, wherein the first request message comprises at least one of the following:
a PIN identifier, identification information of the first device, or first information; wherein
the first information comprises at least one of the following:
PIN service information;
service information of the first device; or
PIN description information.

37. The method according to claim 35 or 36, wherein in a case that the first response message indicates rejection of the first request message, the first response message comprises a cause value, the cause value being used for indicating at least one of the following:
insufficient resources, inability to perform a corresponding service operation, or authorization failure.

38. The method according to claim 36 or 37, wherein the PIN service information comprises at least one of the following:
a service provider identifier of a service provided by the PIN;
a service type of a service provided by the PIN; or
a service feature of a service provided by the PIN.

39. The method according to any one of claims 36 to 38, wherein the service information of the first device comprises at least one of the following:
a service provider identifier of a service provided by the first device;
a service type of a service provided by the first device; or
a service feature of a service provided by the first device.

40. A request processing method, comprising:
receiving, by a first device, a personal Internet of Things network PIN service discovery request message sent by a fourth device; and
sending, by the first device, a PIN service discovery response message to the fourth device, the PIN service discovery response message comprising a first list; wherein
the first list is a list of devices supporting service switching in the PIN, the first list is determined based on first information, and the first information comprises at least one of the following:
PIN service information;
service information of the first device; or
PIN description information;
or, the first list is a list of devices satisfying a first condition; wherein
the first condition comprises at least one of the following:
having a direct connection to the fourth device;
having a first application client, the first application client comprising: an application client deployed by the fourth device or an application client corresponding to a switching service; or
supporting service switching.

41. The method according to claim 40, wherein the supporting service switching comprises:
accepting a second request message sent by the first device, the second request message being used for negotiating service switching in the PIN.

42. The method according to claim 41, wherein the second request message comprises at least one of the following:
a PIN identifier, identification information of the fourth device, the first information, or a security credential, wherein the security credential is used for an authorization or authentication procedure of the service switching.

43. The method according to any one of claims 40 to 42, wherein the PIN service information comprises at least one of the following:
a service provider identifier of a service provided by the PIN;
a service type of a service provided by the PIN; or
a service feature of a service provided by the PIN.

44. The method according to any one of claims 40 to 43, wherein the service information of the first device comprises at least one of the following:
a service provider identifier of a service provided by the first device;
a service type of a service provided by the first device; or
a service feature of a service provided by the first device.

45. An information synchronization apparatus, comprising:
an execution module, configured to perform a first operation during a personal Internet of Things network PIN creation procedure or PIN registration procedure; wherein
the first operation comprises at least one of the following:
receiving a first message from a PIN server, the first message comprising first information; or
sending a second message to the PIN server, the second message comprising the first information; wherein
the first information comprises at least one of the following:
PIN service information;
service information of a first device; or
PIN description information.

46. An information synchronization apparatus, comprising:
an execution module, configured to perform a second operation during a personal Internet of Things network PIN creation procedure or PIN registration procedure; wherein
the second operation comprises at least one of the following:
sending a first message to a first device, the first message comprising first information; or
receiving a second message from the first device, the second message comprising the first information; wherein
the first information comprises at least one of the following:
PIN service information;
service information of the first device; or
PIN description information.

47. A service switching apparatus, comprising:
a sending module, configured to send a first request message to a second device, wherein the first request message is used for negotiating service switching in a PIN, and a device corresponding to the apparatus is a device in a personal Internet of Things network PIN.

48. A service switching apparatus, comprising:
a receiving module, configured to receive a first request message from a first device, wherein the first request message is used for negotiating service switching in a PIN, and a device corresponding to the apparatus is a device in a personal Internet of Things network PIN.

49. A request processing apparatus, comprising:
a receiving module, configured to receive a personal Internet of Things network PIN service discovery request message sent by a fourth device; and
a sending module, configured to send a PIN service discovery response message to the fourth device, the PIN service discovery response message comprising a first list; wherein
the first list is a list of devices supporting service switching in the PIN, the first list is determined based on first information, and the first information comprises at least one of the following:
PIN service information;
service information of a first device; or
PIN description information;
or, the first list is a list of devices satisfying a first condition; wherein
the first condition comprises at least one of the following:
having a direct connection to the fourth device;
having a first application client, the first application client comprising: an application client deployed by the fourth device or an application client corresponding to a switching service; or
supporting service switching.

50. A device, comprising a processor and a memory, wherein the memory is configured to store a program or an instruction capable of running on the processor, and when the program or instruction is executed by the processor, the steps of the information synchronization method according to any one of claims 1 to 17 are implemented, or when the program or instruction is executed by the processor, the steps of the information synchronization method according to any one of claims 18 to 25 are implemented, or when the program or instruction is executed by the processor, the steps of the service switching method according to any one of claims 26 to 33 are implemented, or when the program or instruction is executed by the processor, the steps of the service switching method according to any one of claims 34 to 39 are implemented, or when the program or instruction is executed by the processor, the steps of the request processing method according to any one of claims 40 to 44 are implemented.
